(19) Europäisches Patentamt
European Patent Office
Office européen des brevets

(11) **EP 3 839 554 B1**

(12) **EUROPÄISCHE PATENTSCHRIFT**

(45) Veröffentlichungstag und Bekanntmachung des Hinweises auf die Patenterteilung:
**19.06.2024  Patentblatt 2024/25**

(21) Anmeldenummer: **20202519.3**

(22) Anmeldetag: **19.10.2020**

(51) Internationale Patentklassifikation (IPC):
**G01S 7/481** *(2006.01)*      **G01S 7/4911** *(2020.01)*
**G01S 7/4912** *(2020.01)*      **G01S 7/497** *(2006.01)*
**G01S 17/34** *(2020.01)*

(52) Gemeinsame Patentklassifikation (CPC):
**G01S 7/4817; G01S 7/4815; G01S 7/4911;**
**G01S 7/4917; G01S 7/497; G01S 17/34**

(54) **VORRICHTUNG UND VERFAHREN ZUR ABSTANDSERMITTLUNG EINES OBJEKTS**

DEVICE AND METHOD FOR DETERMINING THE DISTANCE OF OBJECT

DISPOSITIF ET PROCÉDÉ DE DÉTERMINATION DE LA DISTANCE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2019  DE 102019135648**

(43) Veröffentlichungstag der Anmeldung:
**23.06.2021  Patentblatt 2021/25**

(73) Patentinhaber: **Carl Zeiss AG**
**73447 Oberkochen (DE)**

(72) Erfinder: **Höller, Frank**
**73434 Aalen (DE)**

(74) Vertreter: **Ostertag & Partner Patentanwälte mbB**
**Azenbergstraße 35**
**70174 Stuttgart (DE)**

(56) Entgegenhaltungen:
WO-A1-2011/033031      WO-A1-2016/014894
DE-A1- 3 540 157        US-A1- 2018 224 548
US-A1- 2019 353 789

EP 3 839 554 B1

**Beschreibung**

HINTERGRUND DER ERFINDUNG

Gebiet der Erfindung

Die Erfindung betrifft eine Vorrichtung und ein Verfahren zur Abstandsermittlung eines Objekts. Die Vorrichtung und das Verfahren können zur Ermittlung von Abständen sowohl bewegter als auch unbewegter Objekte und insbesondere zur Ermittlung der Topographie bzw. Form eines räumlich ausgedehnten dreidimensionalen Objekts verwendet werden.

Stand der Technik

Zur optischen Abstandsmessung von Objekten ist u.a. ein auch als LIDAR bezeichnetes Messprinzip bekannt, bei welchem ein in seiner Frequenz zeitlich verändertes optisches Signal zu dem betreffenden Objekt hin ausgestrahlt und nach an dem Objekt erfolgter Rückreflexion ausgewertet wird. In der Praxis kommen sowohl laufzeitbasierte Messsysteme (TOF-LIDAR-Messsysteme, TOF = "time of flight"), bei denen direkt die Laufzeit des Laserlichts zum jeweiligen Objekt und zurück gemessen wird, als auch FMCW-LIDAR-Messsysteme mit Verwendung eines frequenzmodulierten FMCW-Lasers (FMCW= "frequency modulated continuous wave") zum Einsatz.

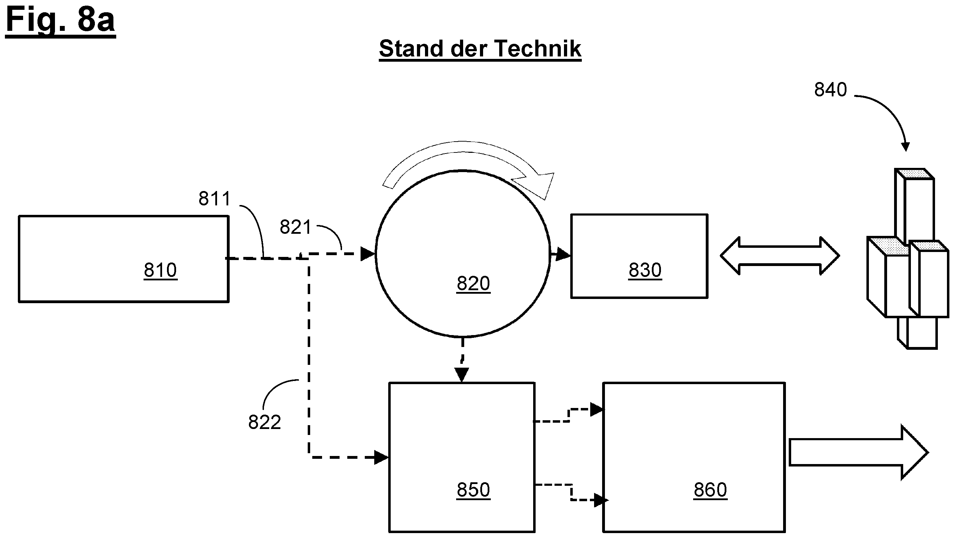

Fig. 8a zeigt lediglich in schematischer Darstellung einen für sich bekannten prinzipiellen Aufbau eines FMCW-LIDAR-Messsystems, in welchem ein von einer Lichtquelle 810 ausgesandtes Signal 811 mit zeitlich veränderter Frequenz (auch als "Chirp" bezeichnet) in zwei Teilsignale aufgespalten wird, wobei diese Aufspaltung über einen nicht dargestellten Strahlteiler (z.B. einen teildurchlässigen Spiegel oder einen faseroptischen Splitter) erfolgt. Die beiden Teilsignale werden über einen Signalkoppler 850 gekoppelt und an einem Detektor 860 einander überlagert, wobei das erste Teilsignal als Referenzsignal 822 ohne Reflexion an dem mit "840" bezeichneten Objekt zum Signalkoppler 850 und zum Detektor 860 gelangt. Das zweite am Signalkoppler 850 bzw. am Detektor 860 eintreffende Teilsignal verläuft hingegen als Messsignal 821 über einen optischen Zirkulator 820 und einen Scanner 830 zum Objekt 840, wird von diesem zurückreflektiert und gelangt somit im Vergleich zum Referenzsignal 822 mit einer Zeitverzögerung und entsprechend veränderter Frequenz zum Signalkoppler 850 und zum Detektor 860.

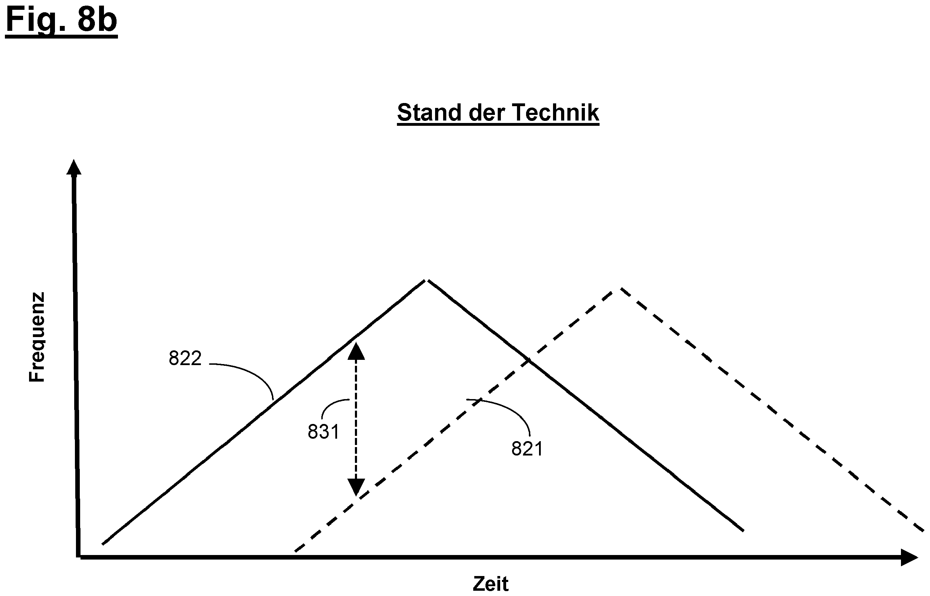

Über eine (in Fig. 8a nicht dargestellte) Auswerteeinrichtung wird das vom Detektor 860 gelieferte Detektorsignal relativ zur Messvorrichtung bzw. der Lichtquelle 810 ausgewertet, wobei die zu einem bestimmten Zeitpunkt erfasste, im Diagramm von Fig. 8b dargestellte Differenzfrequenz 831 zwischen Messsignal 821 und Referenzsignal 822 charakteristisch für den Abstand des Objekts 840 von der Messvorrichtung bzw. der Lichtquelle 810 ist. Gemäß Fig. 8b kann dabei zum Erhalt zusätzlicher Information hinsichtlich der Relativgeschwindigkeit zwischen dem Objekt 840 und der Messvorrichtung bzw. der Lichtquelle 810 der zeitabhängige Frequenzverlauf des von der Lichtquelle 810 ausgesandten Signals 811 auch so beschaffen sein, dass zwei Abschnitte vorliegen, in denen die zeitliche Ableitung der von der Lichtquelle 810 erzeugten Frequenz zueinander entgegengesetzt ist.

Der Scanner 830 kann insbesondere auch als dispersiver Scanner realisiert sein und hierzu wenigstens eine dispersive optische Komponente wie z.B. ein Spektralgitter zur Erzielung einer wellenabhängigen Strahlablenkung aufweisen.

Im Betrieb eines FMCW-LIDAR-Messsystems ist über die Kenntnis der Chirp-Rate (d.h. der zeitlichen Änderungsrate der Frequenz bzw. Wellenlänge) der Lichtquelle hinaus auch die Kenntnis bzw. Bestimmung weiterer Größen erforderlich oder wünschenswert. So wird etwa im Falle des Einsatzes eines dispersiven Scanners auch die Kenntnis der (absoluten) Frequenz bzw. Wellenlänge zur Bestimmung des jeweiligen aktuellen Ablenkwinkels benötigt. Des Weiteren ist i.d.R. auch eine Bestimmung bzw. Regelung der Linearität der Chirp-Rate erforderlich. Im Ergebnis können durch diese Erfordernisse die Komplexität der Anordnung sowie der erforderliche Rechenaufwand (z.B. infolge separater Interferometer, Detektoren sowie Signalauswertesysteme) beträchtlich erhöht werden.

Aus der US 2019/0353789 A1 ist eine Vorrichtung nach dem Oberbegriff des Anspruchs 1 bekannt. Die Teilsignale, die von dem von der Lichtquelle erzeugten optischen Signal mit Hilfe von Strahlteilern abgezweigt werden, werden dort von unterschiedlichen Sensoren erfasst.

Ähnliche Vorrichtungen sind auch aus der WO 2016/014894 A1 und der US 2018/224548 A1 bekannt.

Zum Stand der Technik wird außerdem auf die DE 10 2010 041 634 A1 sowie die CN 105093238A verwiesen.

ZUSAMMENFASSUNG DER ERFINDUNG

Vor dem obigen Hintergrund ist es eine Aufgabe der vorliegenden Erfindung, eine Vorrichtung und ein Verfahren zur Abstandsermittlung von Objekten bereitzustellen, welche eine Reduzierung der Komplexität der Anordnung sowie des erforderlichen Rechenaufwands ermöglichen.

Diese Aufgabe wird durch die Merkmale der nebengeordneten Patentansprüche gelöst.

Insbesondere kann es sich bei der durch die Auswerteeinrichtung ermittelten, wenigstens einen Eigenschaft der Lichtquelle um einen oder mehrere, das von der Lichtquelle ausgesandte Licht charakterisierende numerische Werte handeln.

Der Erfindung liegt insbesondere das Konzept zugrunde, eine optische Verzögerungsstrecken-Anordnung mit wenigstens einer optischen Verzögerungsstrecke in einer Vorrichtung zur Abstandsermittlung in Form eines LIDAR-Messsystems einzusetzen, um neben dem Objektabstand wenigstens eine weitere Eigenschaft der Lichtquelle (z.B. die Chirp-Rate der Lichtquelle und/oder die absolute Frequenz der Lichtquelle zu einem gegebenen Zeitpunkt) zu ermitteln. Hierzu umfasst die erfindungsgemäße Vorrichtung weiter eine Strahlteiler-Anordnung mit wenigstens einem Strahlteiler zum Aufteilen des von der Lichtquelle ausgesandten optischen Signals in eine Mehrzahl von Teilsignalen, welche entweder über die Verzögerungsstrecken-Anordnung oder unter Umgehung dieser Verzögerungsstrecken-Anordnung auf eine Detektoranordnung gelangen, wobei die Zuführung von nicht über die Verzögerungsstrecken-Anordnung geführten Teilsignalen zur Detektoranordnung z.T. nach Reflexion an dem Objekt und z.T. direkt (d.h. ohne vorherige Reflexion an dem Objekt) erfolgt.

Die Erfindung beinhaltet das weitere Konzept, die wie vorstehend beschrieben über unterschiedliche Wege geführten Teilsignale einem einzigen Detektor zuzuführen und somit - im Vergleich zum Einsatz mehrerer Detektoren zur Erfassung der betreffenden Teilsignale - sowohl eine signifikante Vereinfachung des Messaufbaus als auch eine erhebliche Verringerung des bei der Auswertung erforderlichen Rechenaufwands zu erzielen.

Gemäß der Erfindung weist die Detektoranordnung somit genau einen Detektor zur Erfassung des ersten Teilsignals, des zweiten Teilsignals und des dritten Teilsignals auf.

Dabei geht die Erfindung zum einen von der Überlegung aus, dass bei Eintreffen sämtlicher der vorstehend genannten Teilsignale an einem einzigen Detektor und deren kohärenter Überlagerung die letztlich vom Detektor gemessene (Gesamt-)Intensität durch Anwendung einer einzigen Fouriertransformation und Bestimmung der im betreffenden Frequenzspektrum auftretenden Peaks bzw. der diesen Peaks zugeordneten Frequenzen genutzt werden kann, um neben der eigentlichen Abstandsbestimmung entweder - im Falle eines "linearen Chirp" (d.h. einer zeitlich linearen Frequenzänderung) - eine Stabilisierung der Chirp-Rate der Lichtquelle oder - bei nichtlinearem Chirp - eine Bestimmung der momentanen Frequenz der Lichtquelle zu ermöglichen.

Des Weiteren liegt dem vorstehend beschriebenen Konzept die Überlegung zugrunde, dass zu dem zu betreibenden Rechenaufwand vor allem die Durchführung der besagten Fouriertransformation entscheidend beiträgt, wohingegen die Bestimmung von Peaks im erhaltenen Frequenzspektrum sowie die Durchführung weiterer ggf. erforderlicher Berechnungen im Rechenaufwand eher vernachlässigbar sind.

Der Umstand, dass erfindungsgemäß zum Erhalt der vorstehend genannten Informationen nur noch eine einzige Fouriertransformation benötigt wird, hat somit eine Reduzierung (typischerweise im Wesentlichen Halbierung) nicht nur der Detektoranzahl sondern auch des erforderlichen Rechenaufwandes zur Folge.

Die o.g. erfindungsgemäß erzielten Vorteile kommen besonders zur Geltung, wenn in der erfindungsgemäßen Vorrichtung im Sinne einer Parallelisierung eine Mehrzahl optischer Signale (z.B. durch Verwendung einer Mehrzahl von Lichtquellen oder Bereitstellung eines optischen Frequenzkamms) simultan erzeugt bzw. zu dem Objekt zwecks Realisierung eines möglichst schnellen Scanvorgans mit möglichst großem Sichtfeld (FoV = "Field of View") bereitgestellt werden, da in einer solchen "Multikanal-Anordnung" dann eine entsprechend ausgeprägte Reduzierung der benötigten Detektoranzahl bzw. durchzuführenden Fouriertransformationen (z.B. von 48 auf 24) erreicht wird.

Gemäß einer Ausführungsform umfasst die wenigstens eine von der Auswerteeinrichtung ermittelte Eigenschaft der Lichtquelle eine Chirp-Rate der Lichtquelle.

Gemäß einer Ausführungsform umfasst die wenigstens eine von der Auswerteeinrichtung ermittelte Eigenschaft der Lichtquelle eine absolute Frequenz der Lichtquelle.

Gemäß einer Ausführungsform weist die optische Verzögerungsstrecken-Anordnung wenigstens zwei optische Verzögerungsstrecken auf, welche sich hinsichtlich ihrer Dispersion voneinander unterscheiden.

Diesem Aspekt des Einsatzes von zwei optischen Verzögerungsstrecken mit unterschiedlicher Dispersion liegt die Überlegung zugrunde, dass sich für diese Verzögerungsstrecken der Frequenzabstand der jeweiligen Schwebungsfrequenzen, welche für die Überlagerung des die betreffende Verzögerungsstrecke durchlaufenden Teilsignals mit einem die jeweilige Verzögerungsstrecke nicht durchlaufenden (d.h. zuvor ausgekoppelten) Teilsignal erhalten werden, mit Durchstimmung der Frequenz der Lichtquelle ändert, so dass eine entsprechende Rückwärtsrechnung die Ermittlung der Frequenz des von der Lichtquelle ursprünglich ausgesandten optischen Signals ermöglicht.

Gemäß einer Ausführungsform weist die optische Verzögerungsstrecken-Anordnung wenigstens eine optische Verzögerungsstrecke mit einem Gradienten-Faser-Bragggitter auf.

Gemäß einer Ausführungsform ist die wenigstens eine spektral durchstimmbare Lichtquelle zum parallelen Aussenden einer Mehrzahl von Lichtstrahlen mit jeweils zeitlich variierender Frequenz ausgelegt.

Gemäß einer Ausführungsform des erfindungsgemäßen Verfahrens erfolgt das Ermitteln sowohl des Objektabstandes als auch wenigstens einer Eigenschaft der Lichtquelle unter Durchführung genau einer Fouriertransformation eines Detektorsignals der Detektoranordnung.

Gemäß einer Ausführungsform des Verfahrens wird auf Basis der von der Detektoranordnung erfassten Teilsignale die Stabilität der Chirp-Rate der Lichtquelle geregelt.

Gemäß einer Ausführungsform wird das Verfahren unter Verwendung einer Vorrichtung mit den vorstehend beschriebenen Merkmalen durchgeführt.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

KURZE BESCHREIBUNG DER ZEICHNUNGEN

Es zeigen:

Figur 1          eine schematische Darstellung zur Erläuterung des prinzipiellen Aufbaus einer erfindungsgemäßen Vorrichtung zur Abstandsermittlung in einer ersten Ausführungsform;

Figur 2a-3b      Diagramme von Simulationsergebnissen zur Veranschaulichung einer möglichen Auswertung der mit einer erfindungsgemäßen Vorrichtung erzielten Ergebnisse;

Figuren 4-5      Ausführungsformen, die nicht Gegenstand der beanspruchten Erfindung sind;

Figuren 6-7      schematische Darstellungen zur Erläuterung weiterer Ausführungsformen einer erfindungsgemäßen Vorrichtung; und

Figuren 8a-8b    schematische Darstellungen zur Erläuterung von Aufbau und Wirkungsweise einer herkömmlichen Vorrichtung zur Abstandsermittlung.

DETAILLIERTE BESCHREIBUNG BEVORZUGTER AUSFÜHRUNGSFORMEN

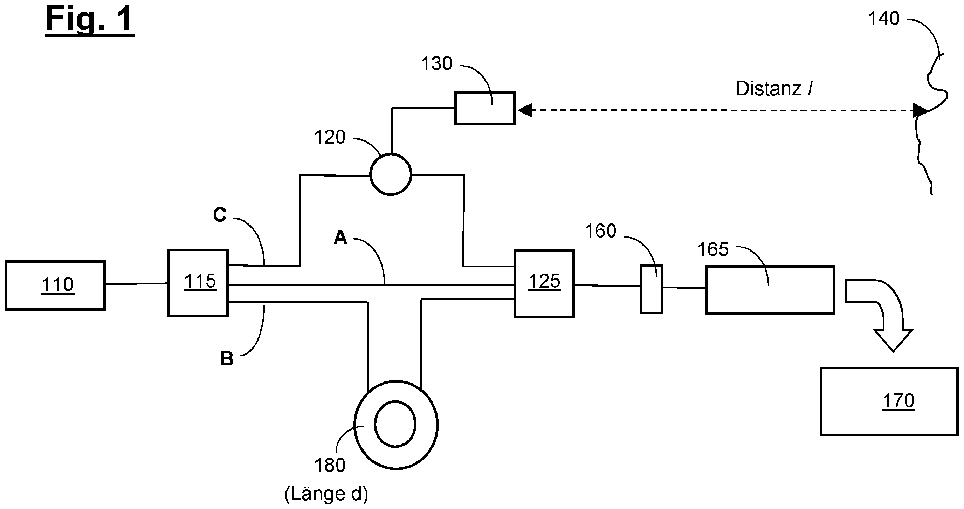

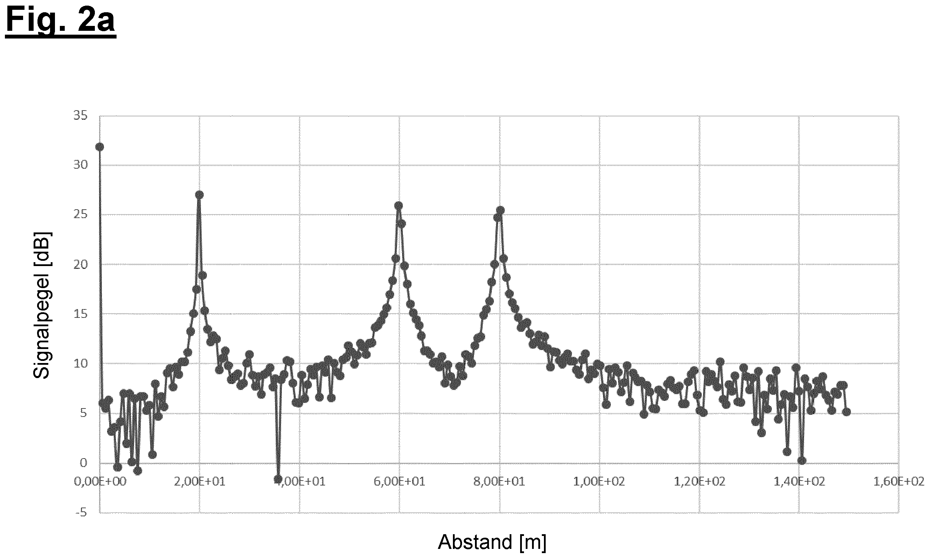

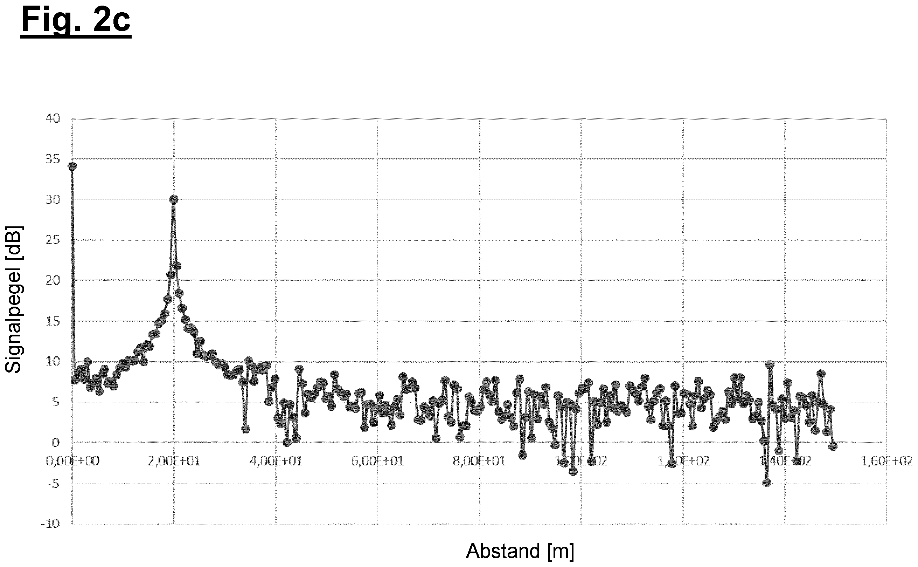

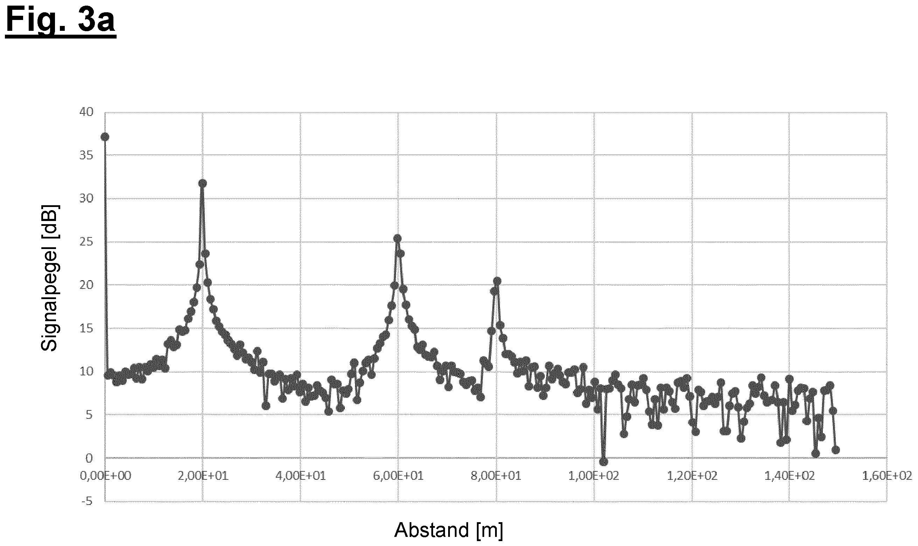

Im Weiteren werden unterschiedliche Ausführungsformen einer erfindungsgemäßen Vorrichtung unter Bezugnahme auf die schematischen Darstellungen in Fig. 1 und Fig. 4-7 sowie die Diagramme von Fig. 2a-2b und Fig. 3a-3b beschrieben.

Diesen Ausführungsformen ist gemeinsam, dass ein von einer Lichtquelle ausgesandtes optisches Signal mit zeitlich variierender Frequenz (= "Chirp") über eine wenigstens einen Strahlteiler umfassende Strahlteiler-Anordnung aufgeteilt und in Form separater Teilsignale einer Detektoranordnung zugeführt wird, wobei wenigstens eines dieser Teilsignale über eine optische Verzögerungsstrecken-Anordnung mit wenigstens einer optischen Verzögerungsstrecke (= "delay line") geführt wird. Die von der Detektoranordnung erfassten Teilsignale (bzw. entsprechende Überlagerungssignale) werden sodann in einer Auswerteeinrichtung und unter Durchführung einer Fouriertransformation zur Ermittlung des Objektabstandes sowie wenigstens einer weiteren Eigenschaft der Lichtquelle ausgewertet.

Unter Bezugnahme zunächst auf Fig. 1 weist die erfindungsgemäße Detektoranordnung genau einen Detektor 160 auf, wobei anhand der vorstehend genannten Fouriertransformation des vom Detektor gemessenen (Intensitäts)Signals wie im Weiteren unter Bezugnahme auf Fig. 2a-3b beschrieben zusätzlich zum Objektabstand auch die Linearität der Chirp-Rate der (in Fig. 1 mit "110" bezeichneten) Lichtquelle bestimmt werden kann. Hierzu erfolgt gemäß Fig. 1 eine Aufteilung des von der Lichtquelle 110 ausgesandten optischen Signals in drei Teilsignale "A", "B" und "C", von denen das Teilsignal "A" ohne Reflexion am hinsichtlich des Abstandes zu vermessenden Objekt 140 sowie unter Umgehung der Verzögerungsstrecken-Anordnung 180 der Detektoranordnung bzw. dem Detektor 160 zugeführt wird. Das Teilsignal "C" verläuft über einen optischen Zirkulator 120 sowie einen Scanner 130 zum Objekt 140 und gelangt erst nach Reflexion an Objekt 140 zum Detektor 160. Das Teilsignal "B" durchläuft hingegen die besagte Verzögerungsstrecken-Anordnung, welche in Fig. 1 mit "180" bezeichnet ist und deren Länge "d" als bekannt vorausgesetzt wird.

Ohne dass die Erfindung hierauf beschränkt wäre, ist gemäß Fig. 1 die Strahlteiler-Anordnung bzw. der Strahlteiler 115 als Demultiplex-Einrichtung dargestellt, wobei über eine entsprechende Multiplex-Einrichtung 125 vor Erreichen des Detektors 160 eine Zusammenführung der vorstehend genannten Teilsignale "A"-"C" erfolgt. In Ausführungsformen kann der Strahlteiler 115 in Form makroskopischer Strahlteiler, insbesondere unter Einsatz eines oder mehrerer Spektralgitter oder einer geeigneten Spiegelanordnung, realisiert sein.

Für die aus dem Eintreffen der drei Teilsignale "A", "B" und "C" am Detektor 160 resultierenden elektrischen Felder gilt

EP 3 839 554 B1

$$E_0(t) = E_0 e^{i\left(\omega + \frac{d\omega}{dt}*t\right)t} \tag{1}$$

$$E_1(t) = t_1 E_0(t) e^{id\omega/dt*d/c*t} \tag{2}$$

$$E_2(t) = t_2 E_0(t) e^{id\omega/dt*2l/c*t} \tag{3}$$

Dabei bezeichnen $t_1$ und $t_2$ Dämpfungsterme, die zwar grundsätzlich entfernungsabhängig sind, jedoch innerhalb einer Messung als konstant angenommen werden können.

Für die vom Detektor 160 gemessene (Gesamt-)Intensität ergibt sich folgender Ausdruck:

$$I(t) = E_0^2\left[(1 + t_1^2 + t_2^2) + 2t_1 \cos\left(\frac{d\omega}{dt} * \frac{d}{c} * t\right) + 2t_2 \cos\left(\frac{d\omega}{dt} * \frac{2l}{c} * t\right) + \right.$$
$$\left. 2t_1 t_2 \cos\left(\frac{d\omega}{dt} * (2l - d)/c * t\right)\right] \tag{4}$$

Nach Durchführung einer Fouriertransformation erhält man im Frequenzspektrum drei Peaks bei den Frequenzen $\frac{d\omega}{dt} * \frac{d}{c}$, $\frac{d\omega}{dt} * \frac{2l}{c}$ und $\frac{d\omega}{dt} * (2l - d)/c$.

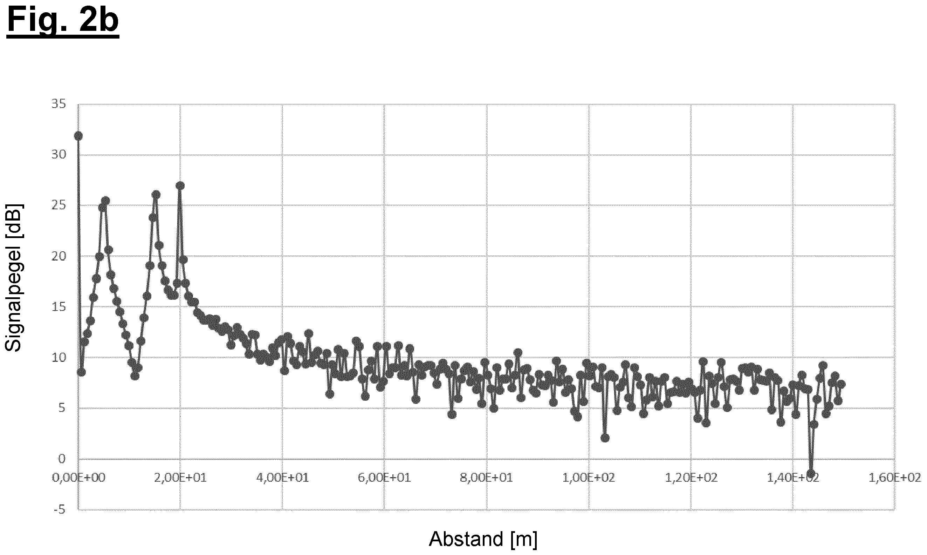

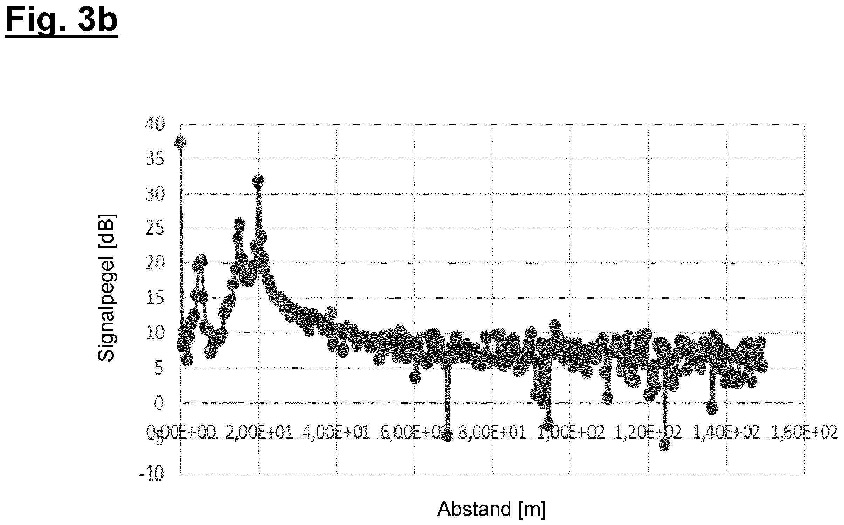

Zur Erläuterung der Auswertung der erfindungsgemäß mit dem Aufbau von Fig. 1 erhaltenen Messergebnisse zeigen Fig. 2a-2b und Fig. 3a-3b jeweils anhand einer Simulation berechnete Frequenzspektren, wobei eine Chirp-Rate von $5*10^{14}$Hz/s und eine Abtastrate von 1GHz zugrundegelegt wurden. Des Weiteren wurde die Länge d der optischen Verzögerungsstrecke 180 zu d=40m angenommen. Als Objektabstand wurde für Fig. 2a und Fig. 3a jeweils ein Wert von I=80m und für Fig. 2b und Fig. 3b ein Wert von I=5m zugrundegelegt. Für den Term (2*I-d) ergibt sich demzufolge für Fig. 2a und Fig. 3a ein Wert größer als Null und für Fig. 2b und Fig. 3b ein Wert kleiner als Null. Von den im jeweiligen Frequenzspektrum erhaltenen Peaks entspricht der "Entfernungspeak" in Fig. 2a und Fig. 3a dem Peak am weitesten rechts, in Fig. 2b und Fig. 3b hingegen dem Peak am weitesten links. Gemäß Fig. 3a-3b kann zum Erhalt eines weiteren Unterscheidungsmerkmals der Signalpegel für das über die Verzögerungsstrecke 180 geführte Teilsignal "B" stets größer gewählt werden als der Signalpegel für das am Objekt 140 reflektierte Teilsignal "C" mit der Folge, dass der "Entfernungspeak" als kleinster Peak im Frequenzspektrum stets (d.h. unabhängig vom aktuellen Wert des Objektabstands I) identifizierbar ist.

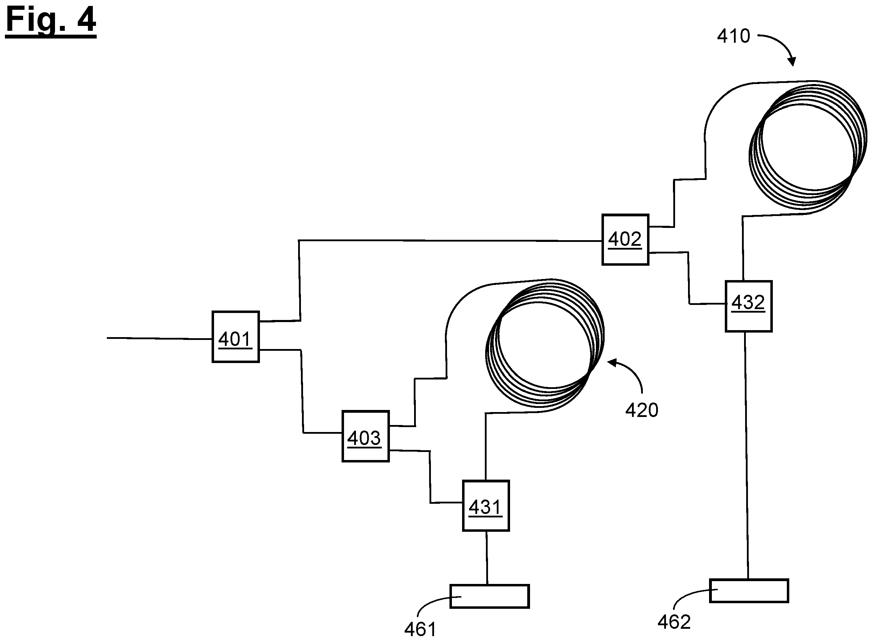

Die in Fig. 4-7 dargestellten Ausführungsformen unterscheiden sich von derjenigen aus Fig. 1 insbesondere dadurch, dass die optische Verzögerungsstrecken-Anordnung zwei optische Verzögerungsstrecken (in Fig. 4-7 mit "410", "420", "510", "520", "610", "620" und "710", bzw. "720" bezeichnet) aufweist, welche sich hinsichtlich ihrer Dispersion voneinander unterscheiden. Dabei wird gemäß Fig. 4-7 das jeweils eine der Verzögerungsstrecken durchlaufende Teilsignal am betreffenden Detektor mit einem im Signalweg vor der betreffenden Verzögerungsstrecke ausgekoppelten (und damit die betreffende Verzögerungsstrecke nicht durchlaufenden) Teilsignal überlagert. Mit "431", "432", "531", "532", "631" bzw. "731" sind hierzu vor dem jeweiligen Detektor angeordnete Signalkoppler bezeichnet.

Der gemäß den Ausführungsformen von Fig. 4-7 jeweils erfolgende Einsatz zweier unterschiedlicher optischer Verzögerungsstrecken mit voneinander verschiedener Dispersion ermöglicht es, zusätzlich bzw. simultan zur Chirp-Rate die momentane absolute Frequenz des von der Lichtquelle erzeugten optischen Signals zu bestimmen. Diesem Aspekt des Einsatzes zweier optischer Verzögerungsstrecken unterschiedlicher Dispersion liegt dabei die Überlegung zugrunde, dass sich für diese Verzögerungsstrecken der Frequenzabstand der jeweiligen Schwebungsfrequenzen, welche für die Überlagerung des die betreffende Verzögerungsstrecke durchlaufenden Teilsignals mit einem die jeweilige Verzögerungsstrecke nicht durchlaufenden (d.h. zuvor ausgekoppelten) Teilsignal erhalten werden, mit Durchstimmung der Frequenz der Lichtquelle ändert, so dass eine entsprechende Rückwärtsrechnung die Ermittlung der Frequenz des von der Lichtquelle ursprünglich ausgesandten optischen Signals ermöglicht.

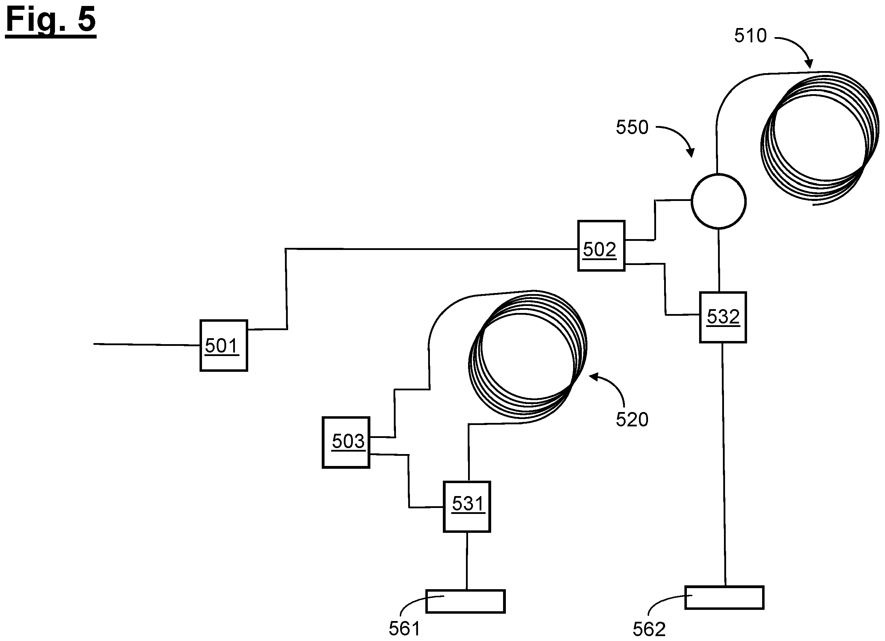

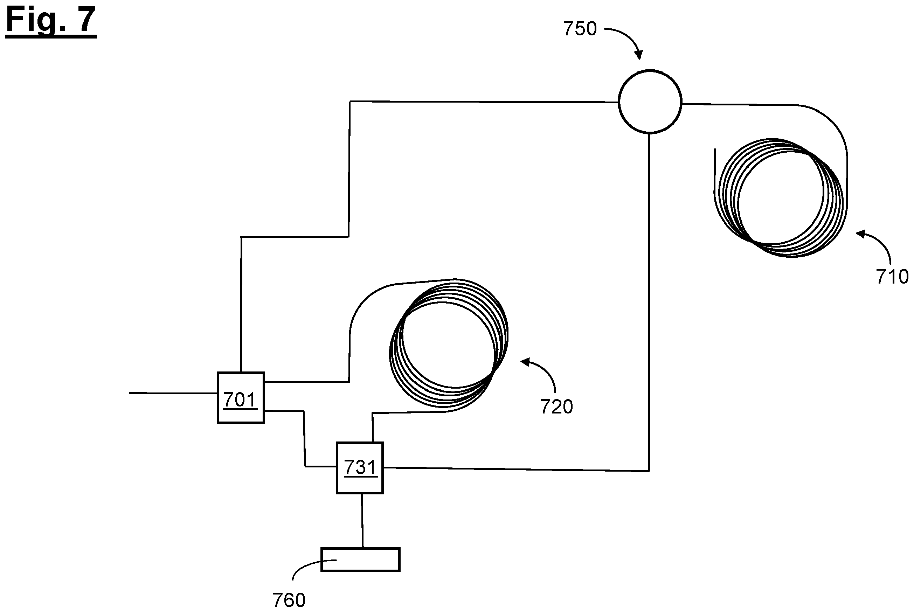

In den Ausführungsformen von Fig. 5 und Fig. 7 ist jeweils eine optische Verzögerungsstrecke 510 bzw. 710 derart ausgestaltet, dass sie ein Gradienten-Faser-Bragg-Gitter umfasst. Durch die gemäß Fig. 5 bzw. Fig. 7 erfolgende Ausgestaltung jeweils einer optischen Verzögerungsstrecke 510 bzw. 710 mit einem Gradienten-Faser-Bragg-Gitter wird jeweils ein vergleichsweise hochdispersives Element geschaffen mit der Folge, dass die insgesamt erforderliche Verzögerungsstrecken-Länge reduziert werden kann.

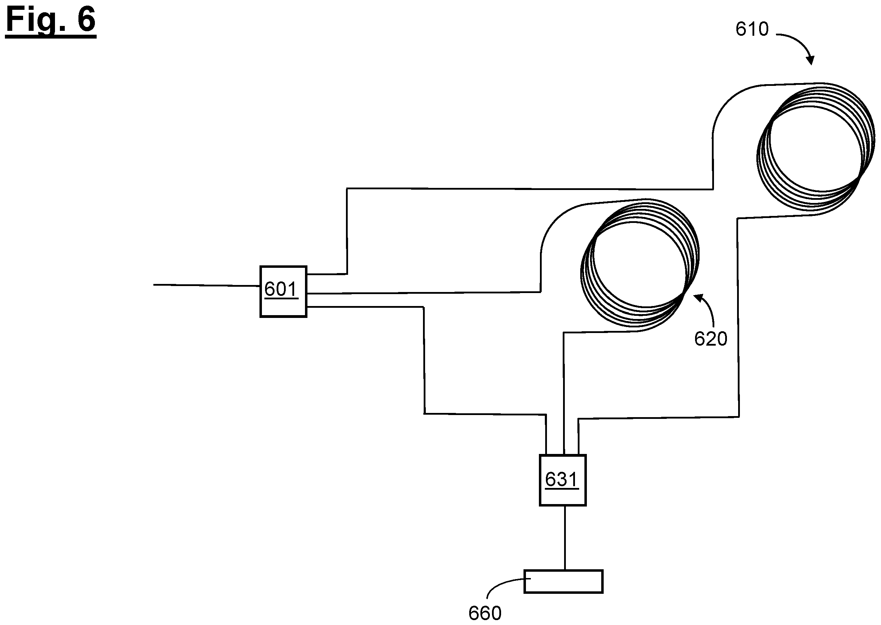

Des Weiteren unterscheiden sich die Ausführungsformen von Fig. 4 bzw. Fig. 5 einerseits von denjenigen aus Fig. 6 und Fig. 7 andererseits dadurch, dass gemäß Fig. 4 und Fig. 5 zur Erfassung der von unterschiedlichen optischen Verzögerungsstrecken kommenden Teilsignale voneinander verschiedene, separate Detektoren 461, 462 bzw. 561, 562 eingesetzt werden, weswegen die Ausführungsformen von Fig. 4 und Fig. 5 nicht Gegenstand der beanspruchten Erfindung sind. Hingegen wird bei den Ausführungsformen von Fig. 6 und Fig. 7 - unter Ausnutzung des bereits anhand von Fig. 1 beschriebenen Konzepts - jeweils nur ein einziger Detektor 660 bzw. 760 zur Erfassung der von unterschiedlichen Verzögerungsstrecken 610, 620 bzw. 710, 720 kommenden Teilsignale verwendet.

**Patentansprüche**

1.  Vorrichtung zur Abstandsermittlung eines Objekts, mit

    • wenigstens einer spektral durchstimmbaren Lichtquelle (110), die konfiguriert ist zum Aussenden wenigstens eines optischen Signals mit zeitlich variierender Frequenz;
    • einer Strahlteiler-Anordnung mit wenigstens einem Strahlteiler (115, 401, 402, 403, 501, 502, 503, 601, 701), der konfiguriert ist zum Aufteilen des optischen Signals in eine Mehrzahl von Teilsignalen (A, B, C);
    • einer optischen Verzögerungsstrecken-Anordnung mit wenigstens einer optischen Verzögerungsstrecke (180, 410, 420, 510, 520, 610, 620, 710, 720);
    • einer Detektoranordnung; und
    • einer Auswerteeinrichtung (170);
    • wobei die Vorrichtung so ausgelegt ist, dass ein erstes Teilsignal (A) der Teilsignale ohne Reflexion an dem Objekt (140) und unter Umgehung der Verzögerungsstrecken-Anordnung der Detektoranordnung zugeführt wird, wenigstens ein zweites Teilsignal (B) der Teilsignale über die Verzögerungsstrecken-Anordnung der Detektoranordnung zugeführt wird, und ein drittes Teilsignal (C) der Teilsignale nach Reflexion an dem Objekt (140) der Detektoranordnung zugeführt wird;
    • wobei die Auswerteeinrichtung (170) zum Ermitteln sowohl des Objektabstands als auch wenigstens einer Eigenschaft der Lichtquelle (110) auf Basis der von der Detektoranordnung erfassten Teilsignale ausgelegt ist;

    **dadurch gekennzeichnet, dass**
    die Detektoranordnung genau einen Detektor (160, 660, 760) zur Erfassung des ersten Teilsignals (A), des zweiten Teilsignals (B) und des dritten Teilsignals (C) aufweist.

2.  Vorrichtung nach Anspruch 1, **dadurch gekennzeichnet, dass** die wenigstens eine von der Auswerteeinrichtung (170) ermittelte Eigenschaft der Lichtquelle (110) eine Chirp-Rate der Lichtquelle (110) umfasst.

3.  Vorrichtung nach Anspruch 1, **dadurch gekennzeichnet, dass** die wenigstens eine von der Auswerteeinrichtung (170) ermittelte Eigenschaft der Lichtquelle (110) eine absolute Frequenz der Lichtquelle (110) umfasst.

4.  Vorrichtung nach einem der vorhergehenden Ansprüche, **dadurch gekennzeichnet, dass** die optische Verzögerungsstrecken-Anordnung wenigstens zwei optische Verzögerungsstrecken (410, 420, 510, 520, 610, 620, 710, 720) aufweist, welche sich hinsichtlich ihrer Dispersion voneinander unterscheiden.

5.  Vorrichtung nach einem der vorhergehenden Ansprüche, **dadurch gekennzeichnet, dass** die optische Verzögerungsstrecken-Anordnung wenigstens eine optische Verzögerungsstrecke (510, 710) mit einem Gradienten-Faser-Bragggitter aufweist.

6.  Vorrichtung nach einem der vorhergehenden Ansprüche, **dadurch gekennzeichnet, dass** die wenigstens eine spektral durchstimmbare Lichtquelle zum parallelen Aussenden einer Mehrzahl von Lichtstrahlen mit jeweils zeitlich variierender Frequenz ausgelegt ist.

7.  Verfahren zur Abstandsermittlung eines Objekts,

    - wobei von einer spektral durchstimmbaren Lichtquelle (110) wenigstens ein optisches Signal mit zeitlich variierender Frequenz ausgesandt wird;
    - wobei dieses optische Signal über eine Strahlteiler-Anordnung mit wenigstens einem Strahlteiler (115, 401, 402, 403, 501, 502, 503, 601, 701) in eine Mehrzahl von Teilsignalen (A, B, C) aufgeteilt wird;
    - wobei ein erstes Teilsignal (A) der Teilsignale ohne Reflexion an dem Objekt (140) und unter Umgehung einer Verzögerungsstrecken-Anordnung (180) einer Detektoranordnung zugeführt wird, wenigstens ein zweites Teilsignal (B) der Teilsignale über eine Verzögerungsstrecken-Anordnung (180) der Detektoranordnung zugeführt wird, und ein drittes Teilsignal (C) der Teilsignale nach Reflexion an dem Objekt (140) der Detektoranordnung zugeführt wird;
- wobei auf Basis der von der Detektoranordnung erfassten Teilsignale sowohl der Objektabstand als auch wenigstens eine Eigenschaft der Lichtquelle (110) ermittelt werden,

**dadurch gekennzeichnet, dass**
die Detektoranordnung genau einen Detektor (160, 660, 760) aufweist, der das erste Teilsignal (A), das zweite Teilsignal (B) und das dritte Teilsignal (C) erfasst.

8. Verfahren nach Anspruch 7, **dadurch gekennzeichnet, dass** das Ermitteln sowohl des Objektabstandes als auch wenigstens einer Eigenschaft der Lichtquelle (110) unter Durchführung genau einer Fouriertransformation eines Detektorsignals der Detektoranordnung erfolgt.

9. Verfahren nach Anspruch 7 oder 8, **dadurch gekennzeichnet, dass** auf Basis der von der Detektoranordnung erfassten Teilsignale die Stabilität der Chirp-Rate der Lichtquelle (110) geregelt wird.

10. Verfahren nach einem der Ansprüche 7 bis 9, **dadurch gekennzeichnet, dass** dieses unter Verwendung einer Vorrichtung nach einem der Ansprüche 1 bis 6 durchgeführt wird.

**Claims**

1. Device for determining the distance of an object, comprising

   • at least one spectrally tunable light source (110) configured to emit at least one optical signal having a time-varying frequency;
   • a beam splitter arrangement comprising at least one beam splitter (115, 401, 402, 403, 501, 502, 503, 601, 701), which is configured to split the optical signal into a plurality of partial signals (A, B, C);
   • an optical delay line arrangement comprising at least one optical delay line (180, 410, 420, 510, 520, 610, 620, 710, 720);
   • a detector arrangement; and
   • an evaluation device (170);
   • wherein the device is adapted such that a first partial signal (A) of the partial signals is fed to the detector arrangement without reflection at the object (140) and bypassing the delay line arrangement, at least a second partial signal (B) of the partial signals is fed to the detector arrangement via the delay line arrangement, and a third partial signal (C) of the partial signals is fed to the detector arrangement after reflection at the object (140);
   • wherein the evaluation device (170) is configured to determine both the object distance and at least one property of the light source (110) on the basis of the partial signals detected by the detector arrangement;

   **characterized in that**
   the detector arrangement comprises exactly one detector (160, 660, 760) for detecting the first partial signal (A), the second partial signal (B) and the third partial signal (C).

2. Device according to claim 1, **characterized in that** the at least one property of the light source (110) determined by the evaluation device (170) comprises a chirp rate of the light source (110).

3. Device according to claim 1, **characterized in that** the at least one property of the light source (110) determined by the evaluation device (170) comprises an absolute frequency of the light source (110).

4. Device according to any of the preceding claims, **characterized in that** the optical delay line arrangement has at least two optical delay lines (410, 420, 510, 520, 610, 620, 710, 720) which differ from one another in terms of their dispersion.

5. Device according to any of the preceding claims, **characterized in that** the optical delay line arrangement comprises at least one optical delay line (510, 710) comprising a gradient fibre bragg grating.

6. Device according to any of the preceding claims, **characterized in that** the at least one spectrally tunable light source is configured to emit a plurality of light beams in parallel, each having a time-varying frequency.

**7.** Method for determining the distance of an object,

- wherein at least one optical signal having a time-varying frequency is emitted from a spectrally tunable light source (110);
- wherein this optical signal is divided into a plurality of partial signals (A, B, C) via a beam splitter arrangement comprising at least one beam splitter (115, 401, 402, 403, 501, 502, 503, 601, 701);
- wherein a first partial signal (A) of the partial signals is fed to a detector arrangement without reflection at the object (140) and bypassing a delay line arrangement (180), at least a second partial signal (B) of the partial signals is fed to the detector arrangement via a delay line arrangement (180), and a third partial signal (C) of the partial signals is fed to the detector arrangement after reflection at the object (140);
- wherein both the object distance and at least one property of the light source (110) are determined on the basis of the partial signals detected by the detector arrangement,

**characterized in that**
the detector arrangement comprises exactly one detector (160, 660, 760) which detects the first partial signal (A), the second partial signal (B) and the third partial signal (C).

**8.** Method according to claim 7, **characterized in that** the determination of both the object distance and at least one property of the light source (110) is carried out by performing exactly one Fourier transformation of a detector signal of the detector arrangement.

**9.** Method according to claim 7 or 8, **characterized in that** the stability of the chirp rate of the light source (110) is controlled on the basis of the partial signals detected by the detector arrangement.

**10.** The method according to any of claims 7 to 9, **characterized in that** it is carried out using a device according to any one of claims 1 to 6.


**Revendications**

**1.** Dispositif pour la détermination d'écart d'un objet, avec

• au moins une source lumineuse ajustable de manière spectrale (110) qui est configurée pour l'émission d'au moins un signal optique avec une fréquence variant dans le temps ;
• un agencement de séparateur de faisceaux avec au moins un séparateur de faisceaux (115, 401, 402, 403, 501, 502, 503, 601, 701) qui est configuré pour la division du signal optique en une pluralité de signaux partiels (A, B, C) ;
• un agencement de lignes de retard optiques avec au moins une ligne de retard optique (180, 410, 420, 510, 520, 610, 620, 710, 720) ;
• un agencement de détecteur ; et
• une installation d'évaluation (170) ;
• dans lequel le dispositif est conçu de sorte qu'un premier signal partiel (A) des signaux partiels est acheminé à l'agencement de détecteur sans réflexion sur l'objet (140) et en contournant l'agencement de lignes de retard, au moins un deuxième signal partiel (B) des signaux partiels est acheminé à l'agencement de détecteur par le biais de l'agencement de lignes de retard, et un troisième signal partiel (C) des signaux partiels est acheminé à l'agencement de détecteur après réflexion sur l'objet (140) ;
• dans lequel l'installation d'évaluation (170) est conçue pour la détermination aussi bien de l'écart de l'objet qu'au moins d'une propriété de la source lumineuse (110) sur la base des signaux partiels détectés par l'agencement de détecteur ;

**caractérisé en ce que**
l'agencement de détecteur présente exactement un détecteur (160, 660, 760) pour la détection du premier signal partiel (A), du deuxième signal partiel (B) et du troisième signal partiel (C).

**2.** Dispositif selon la revendication 1, **caractérisé en ce que** l'au moins une propriété de la source lumineuse (110) déterminée par l'installation d'évaluation (170) comprend un taux de compression d'impulsions de la source lumineuse (110).

**3.** Dispositif selon la revendication 1, **caractérisé en ce que** l'au moins une propriété de la source lumineuse (110) déterminée par l'installation d'évaluation (170) comprend une fréquence absolue de la source lumineuse (110).

**4.** Dispositif selon une des revendications précédentes, **caractérisé en ce que** l'agencement de lignes de retard optiques présente au moins deux lignes de retard optiques (410, 420, 510, 520, 610, 620, 710, 720) qui se différencient l'une de l'autre en ce qui concerne leur dispersion.

**5.** Dispositif selon une des revendications précédentes, **caractérisé en ce que** l'agencement de lignes de retard optiques présente au moins une ligne de retard optique (510, 710) avec un réseau de Bragg à fibre à gradient d'indice.

**6.** Dispositif selon une des revendications précédentes, **caractérisé en ce que** l'au moins une source lumineuse ajustable de manière spectrale est conçue pour l'émission parallèle d'une pluralité de rayons lumineux avec à chaque fois une fréquence variant dans le temps.

**7.** Procédé pour la détermination d'écart d'un objet,

- dans lequel au moins un signal optique avec une fréquence variant dans le temps est émis par une source lumineuse ajustable de manière spectrale (110) ;
- dans lequel ce signal optique est divisé en une pluralité de signaux partiels (A, B, C) par le biais d'un agencement de séparateur de faisceaux avec au moins un séparateur de faisceaux (115, 401, 402, 403, 501, 502, 503, 601, 701) ;
- dans lequel un premier signal partiel (A) des signaux partiels est acheminé à un agencement de détecteur sans réflexion sur l'objet (140) et en contournant un agencement de lignes de retard (180), au moins un deuxième signal partiel (B) des signaux partiels est acheminé à l'agencement de détecteur par le biais d'un agencement de lignes de retard (180), et un troisième signal partiel (C) des signaux partiels est acheminé à l'agencement de détecteur après réflexion sur l'objet (140) ;
- dans lequel aussi bien l'écart de l'objet qu'au moins une propriété de la source lumineuse (110) sont déterminés sur la base des signaux partiels détectés par l'agencement de détecteur,

**caractérisé en ce que**
l'agencement de détecteur présente exactement un détecteur (160, 660, 760) qui détecte le premier signal partiel (A), le deuxième signal partiel (B) et le troisième signal partiel (C).

**8.** Procédé selon la revendication 7, **caractérisé en ce que** la détermination aussi bien de l'écart de l'objet qu'au moins d'une propriété de la source lumineuse (110) s'effectue en réalisant exactement une transformation de Fourier d'un signal de détecteur de l'agencement de détecteur.

**9.** Procédé selon la revendication 7 ou 8, **caractérisé en ce que** la stabilité du taux de compression d'impulsions de la source lumineuse (110) est régulée sur la base des signaux partiels détectés par l'agencement de détecteur.

**10.** Procédé selon une des revendications 7 à 9, **caractérisé en ce que** celui-ci est réalisé en utilisant un dispositif selon une des revendications 1 à 6.

**Fig. 1**

170

165

160

125

130

Distanz *l*

140

120

A

C

115

B

180
(Länge d)

110

EP 3 839 554 B1

# Fig. 2a

Signalpegel [dB]

Abstand [m]

Fig. 2b

EP 3 839 554 B1

# Fig. 2c

EP 3 839 554 B1

Fig. 3a

EP 3 839 554 B1

# Fig. 3b

EP 3 839 554 B1

EP 3 839 554 B1

**Fig. 4**

# Fig. 5

EP 3 839 554 B1

# Fig. 6

EP 3 839 554 B1

**Fig. 7**

EP 3 839 554 B1

**Fig. 8a**

Stand der Technik

# Fig. 8b

**Stand der Technik**

822

831

821

Frequenz

Zeit

EP 3 839 554 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190353789 A1
- WO 2016014894 A1
- US 2018224548 A1
- DE 102010041634 A1
- CN 105093238 A